# EUROPÄISCHE PATENTSCHRIFT

(11) **EP 0 370 451 B1**
(45) Veröffentlichungstag und Bekanntmachung des Hinweises auf die Patenterteilung: **02.11.1994**
(21) Anmeldenummer: 89121496.7
(22) Anmeldetag: 21.11.1989
(51) Int. Cl.: H01R 43/04

(54) **Vorrichtung zum Crimpanschluss von elektrischen Verbindungselementen an elektrischen Leitungen**
Device for crimping terminals onto electrical leads
Dispositif de sertissage de bornes sur des conducteurs électriques

(30) Priorität: 22.11.1988 DE 3839357; 14.12.1988 DE 3842009
(43) Veröffentlichungstag der Anmeldung: 30.05.1990
(73) Patentinhaber: Kabelwerke Reinshagen GmbH, D-42369 Wuppertal (DE)
(72) Erfinder: Enneper, Klaus, D-5608 Radevormwald (DE); Monsieur, Dirk Dipl.-Ing., D-5650 Solingen 1 (DE); Schwager, Eckbert, D-5600 Wuppertal 21 (DE)
(74) Vertreter: Priebisch, Rüdiger, Dipl.-Ing., Dipl.-Wirtsch.-Ing. (FH)

(56) Entgegenhaltungen:
- EP-A- 0 184 204
- EP-A- 0 291 329
- US-A- 4 400 873

## Beschreibung

Die Erfindung richtet sich auf eine Vorrichtung der im Oberbegriff des Anspruches 1 angegebenen Art, vergleiche z.B. EP-A-184 204.

Bei der bekannten Vorrichtung nach der DE-AS 19 22 557 wurde der zeitliche Verlauf der Crimpkraft während des Abwärtshubs des Oberwerkzeugs vom Kraftmesser erfaßt und über einen elektronischen Steuerkreis zur Regelung eines Elektromagneten benutzt, der als Hubantrieb zum Crimpanschluß der Verbindungselemente diente. Dadurch sollen Verbindungselemente mit unterschiedlichen Abmessungen einen guten Crimpanschluß erfahren. Damit ergeben sich nicht nur bei unterschiedlichen Verbindungselementen, sondern auch bei Verbindungselementen der gleichen Sorte durch entsprechend angepaßte Aktivierung des den Arbeitshub bewirkenden Elektromagneten unterschiedliche Endgrößen bei den Crimpkräften. Eine Qualitätskontrolle des vollzogenen Crimpanschlusses war deshalb nicht möglich, weil bei fehlerhaftem Material, das beispielsweise hinsichtlich seines Querschnittes abweicht, durch die Regelung der Krafteinwirkung allein nicht ein idealer Crimpanschluß an der Leitung erreicht werden konnte. Fehlerhaft angeschlossene Verbindungselemente mußten durch eine zeitaufwendige Nachkontrolle ermittelt und aussortiert werden. Defekte an den zu verarbeitenden Elementen konnten zu einer Beschädigung der kostspieligen Werkzeuge führen. Abgesehen von den aufwendigen Reparaturkosten führten solche Werkzeugdeformationen zur Herstellung fehlerhafter Produkte, was zu einem hohen Ausschuß führen konnte.

Der Erfindung liegt die Aufgabe zugrunde, eine zuverlässige Vorrichtung der im Oberbegriff des Anspruches 1 angeführten Art zu entwickeln, die auf einfache Weise die Qualität der von ihr hergestellten Crimpanschlüsse selbst überwacht und auf ermittelte Fehler reagiert. Dies wird erfindungsgemäß durch die im Kennzeichen des Anspruches 1 angeführten Maßnahmen erreicht, denen folgende besondere Bedeutung zukommt:

Der Kraftmesser hat nur die Aufgabe, in der Vorrichtung einen voreingestellten Endwert der Crimpkraft zu überwachen und dies einem Auswerter sofort zu melden, der dann die weiteren Steuerungen ausführt. Dieser zu überwachende Endwert ist zwar einstellbar, aber für die Verarbeitung von Verbindungselementen der gleichen Sorte eine feststehende Größe, die einerseits für eine einwandfreie Crimpung bei normalen Verhältnissen sorgt und andererseits doch ausreichend niedrig ist, um bei Fehlern eine Beschädigung der Werkzeuge der Vorrichtung mit Sicherheit auszuschließen. Der Kraftmesser fungiert als Schalter, der bei Erreichen des eingestellten Endwerts der Crimpkraft den weiteren Abwärtshub des Oberwerkzeugs gegenüber dem Unterwerkzeug stoppt und in einen Rückhub umwandelt. Es versteht sich, daß, wenn nachfolgend von einer Hubbewegung des Oberwerkzeugs die Rede ist, hiermit stets eine Relativbewegung zwischen dem Ober- und Unterwerkzeug gemeint ist. Im konkreten Fall könnte daher das Oberwerkzeug ruhen und das Unterwerkzeug die Hubbewegung ausführen, wie auch alternativ beide Werkzeuge gleichzeitig aufeinanderzu bewegt sein könnten.

Damit bestimmt der Kraftmesser auch den unteren Umkehrpunkt in der Hubbewegung des Oberwerkzeugs, der stets dann vorliegt, wenn der voreingestellte Endwert der Crimpkraft erreicht ist. Dieser untere Umkehrpunkt verändert sich, wenn bei der zu verarbeitenden Sorte von Verbindungselementen mit zugehörigen elektrischen Leitungen sich Unregelmäßigkeiten hinsichtlich des Werkstoffs, des Querschnitts, der Formgebung oder des Betriebsablaufs bei der Hubbewegung ergeben sollten. Die erfindungsgemäße Vorrichtung hat nun als weiteres Kriterium einen Längenmesser integriert, der infolge der Veränderung des unteren Umkehrpunkts nun entscheidet, ob wirklich mit dem vorgegebenen Endwert der Crimpkraft ein einwandfreier Crimpanschluß des Verbindungselements sich ergeben hat. Der Meßfühler des Längenmessers ist vorzugsweise in Richtung der Hubbewegung meßwirksam, weil die Öffnung der Krallen in der Regel in diese Richtung weist. Es versteht sich, daß man die Richtung der Längenmessung alternativ oder zusätzlich auch in eine andere geneigte oder quergerichtete Position gegenüber der Hubrichtung ausführen könnte, sofern in dieser Richtung die erzielte Crimpform bei unterschiedlicher Anschlußqualität sich verändert. Es fällt somit ein individueller Ist-Wert im Lägennmaß des fertig gecrimpten Verbindungselements an und wird ebenfalls dem Auswerter zugeführt. Im Auswerter ist nun ferner ein den idealen Verhältnissen entsprechender Soll-Wert des Crimpmaßes voreinstellbar. Der Auswerter bildet nun eine Differenz zwischen dem Ist-Wert und dem voreingestellten Soll-Wert und wertet den betreffenden Crimpanschluß dann als fehlerhaft, wenn die Differenz einen bestimmten, ebenfalls voreinstellbaren Toleranzbereich übersteigt.

Solche fehlerhafte Crimpanschlüsse können nun zu verschiedenen Reaktionen des Auswerters führen, die entsprechend den jeweiligen Betriebsbedingungen gewählt werden. So kann die Vorrichtung, gemäß Anspruch 2, abgeschaltet werden. Der Auswerter kann einen optischen oder einen akustischen Alarmgeber auslösen, wie Anspruch 4 vorschlägt, oder, gemäß Anspruch 3, ein Greifwerkzeug od. dgl. in Funktion setzen, welches das fehlerhafte Produkt aus der Vorrichtung entfernt, so daß diese sogleich automatisch weiterlaufen kann.

Sofern die Messung in Hubrichtung erfolgt, kann der Meßfühler, entsprechend Anspruch 5, die wegen des jeweils individuell unterschiedlichen unteren Umkehrpunkts den Weg des Oberwerkzeugs messen. Bewährt hat sich hierzu in der Praxis ein Meßstift gemäß Anspruch 6. Der Sensor des Kraftmessers kann an einem beliebigen Ort der Vorrichtung angeordnet sein, sofern nur sichergestellt ist, daß ein stets ausreichender, proportionaler Anteil des Endwerts der jeweiligen Crimpkraft übertragen wird. So kann ein solcher Sensor, gemäß Anspruch 7, im Bereich des Oberwerkzeugs und dort insbesondere innerhalb des zugehörigen Hubgestänges angeordnet sein, oder, gemäß Anspruch 8, im Bereich des Unterwerkzeugs, beispielsweise integriert in dessen Widerlager.

Die Ausgestaltung des Auswerters kann in der aus Anspruch 9 bis 12 ersichtlichen Weise gestaltet sein, was die Bedienung und die Überwachung der Vorrichtung erleichtert. Weitere Maßnahmen und Vorteile der Erfindung ergeben sich aus der nachfolgenden Beschreibung und den Zeichnungen. Die Erfindung richtet sich dabei auf alle neuen Merkmale und Merkmalskombinationen, auch wenn diese nicht ausdrücklich in den Ansprüchen angeführt sein sollten. In den Zeichnungen ist die Erfindung in einem Ausführungsbeispiel dargestellt. Es zeigen:
- Fig. 1: in perspektivischer Darstellung den Aufbau des mechanischen Teils der Vorrichtung nach der Erfindung,
- Fig. 2 a, b und c: in perspektivischer Darstellung die verschiedenen Arbeitsphasen bei Ausführung eines Crimpanschlusses,
- Fig. 3,: teils im Ausbruch und im Schnitt, eine Seitenansicht der Vorrichtung im Sinne des Pfeils Z von Fig. 1 mit einem zugehörigen Auswerter und dessen in nicht maßstabsgerechter Anordnung wiedergegebenen Eingabe- sowie Anzeige-Einrichtung und
- Fig. 4 bis 10: in starker Vergrößerung Querschnittansichten durch fertige Crimpanschlüsse unterschiedlicher Qualität, an denen das erfindungsgemäße Verfahren näher zu verdeutlichen ist, wobei die Fig. 5 und 8, als Vergleichsbild, jeweils einen ordnungsgemäßen Crimpanschluß wiedergeben.

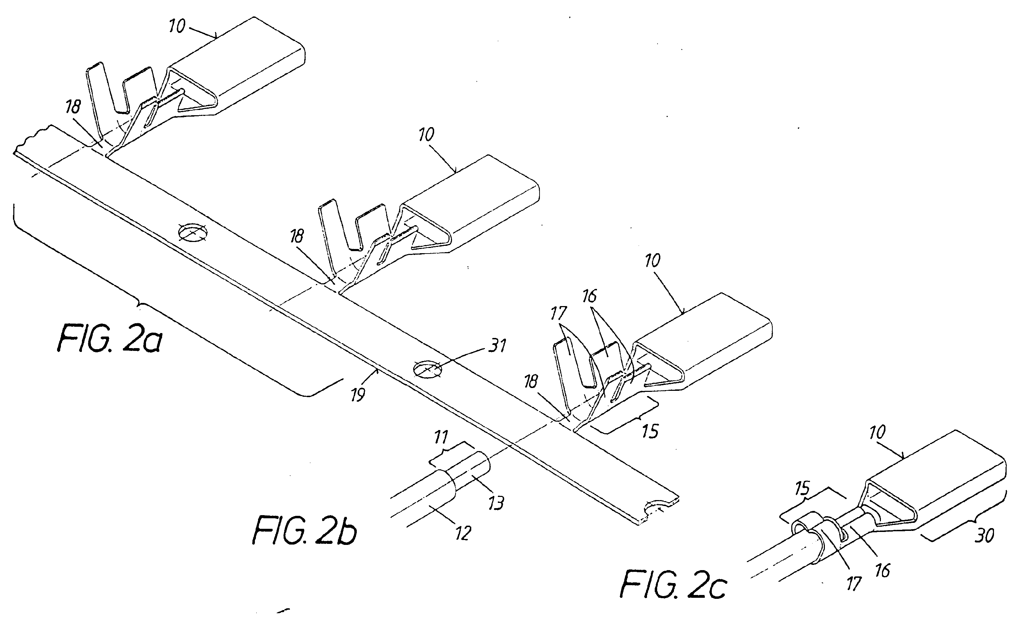

Ziel der Erfindung ist es, das in Fig. 2 c gezeigte Produkt herzustellen, das aus einem Verbindungselement 10 besteht, das am Ende 11 einer elektrischen Leitung 12 angecrimpt werden soll. Die elektrische Leitung 12 besteht vorzugsweise aus einem elektrischen Leiter 13 mit einer Vielzahl von Adern 14, wie aus der vergrößerten Querschnittansicht von Fig. 5 besonders gut zu entnehmen ist. Dazu wird das Leitungsende 11 abisoliert. Das Verbindungselement 10 umfaßt dabei ein Anschlußstück 15 mit crimpfähigen Krallen 16 zur elektrischen Kontaktierung des Leiters 13 und zweckmäßigerweise weitere Krampen 17 zur Zugentlastung, die auf der Isolation der elektrischen Leitung 12 anklemmbar sind. Eine solche endgültige Position der Krallen und Krampen ist in Fig. 2 c gezeigt.

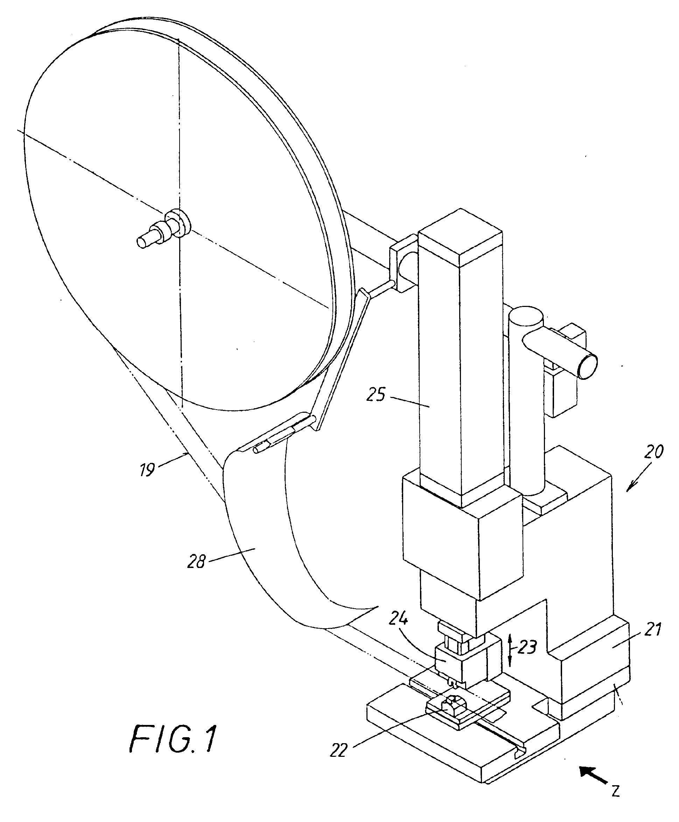

Die Verbindungselemente 10 sind über einen am Anschlußstück 15 sitzenden Steg 18 zunächst an einem fortlaufenden Band 19 angesetzt, das, gemäß Fig. 1, von einer Vorratsrolle kommend der Vorrichtung 20 zugeführt wird. Im vorliegenden Fall handelt es sich bei dem Verbindungselement 10 um einen Steckverbinder, der einstückig mit dem Anschlußstück 15 patrizenförmige und/oder matrizenförmige Kupplungsteile 30, gemäß Fig. 2 c aufweist.

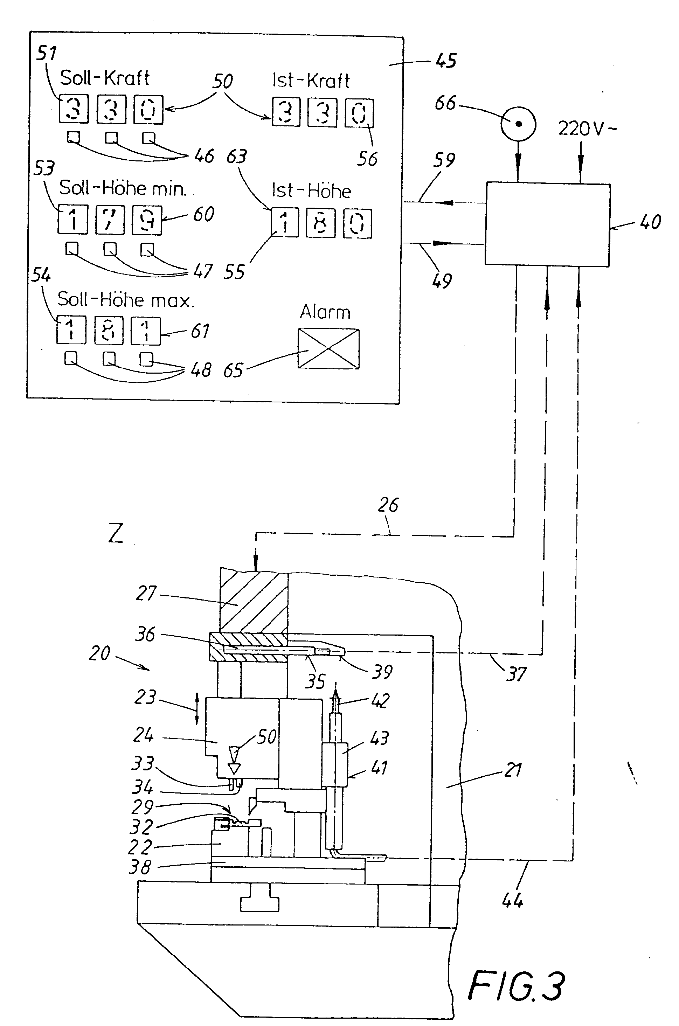

Die Vorrichtung 20 umfaßt ein ortsfest in einem Ständer 21 angeordnetes Unterwerkzeug 22 sowie ein demgegenüber eine Hubbewegung 23 ausführenden Oberwerkzeug 24. Der Hubantrieb 25, der an sich von beliebiger Art sein kann, besteht hier aus einer durch Druckluft, gemäß der schematisch in Fig. 3 gezeigten Druckluft-Leitung 26 angetriebenen Kolben-Zylinder-Anordnung 25, deren Kolben die Hubbewegung 23 eines bruchstückhaft in Fig. 3 gezeigten Stempels 27 bestimmt.

Das Band 19 mit einer Schar von Verbindungselementen 10 wird fortlaufend über Leitflächen 28 gemäß Fig. 1 intermittierend der in Fig. 3 angedeuteten Crimpstelle 29 zwischen den beiden Werkzeugen 22, 24 zugeführt. Diese Crimpstelle 29 ist seitens des Unterwerkzeugs 22 durch geeignete Aufnahmen im Unterwerkzeug 22 bestimmt, die, bei jedem Verbindungselement 10, für eine ausgerichtete Position der Krallen 16 und der Krampen 17 bezüglich der die Crimpung bei der Hubbewegung 23 vollziehenden Verformungsflächen 34 sorgen. Diesen im Oberwerkzeug 24 nebengeordnet befinden sich Schnittflächen 33, die gleichzeitig mit dem Crimpen den Steg 18 des jeweils an der Crimpstelle 29 befindlichen Verbindungselements 10 durchtrennen.

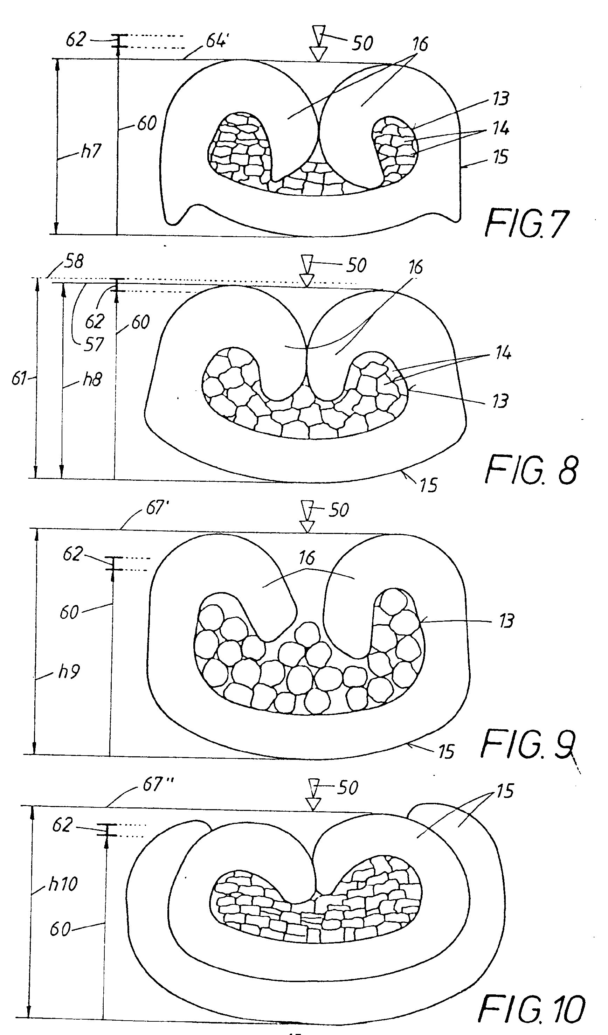

Es befindet sich zunächst das Oberwerkzeug 24 in seiner aus Fig. 1 und 3 ersichtlichen oberen Umkehrstellung seiner Hubbewegung 23, währenddessen das Band 19 unter Nutzung von bei 31 angreifende Antriebsmittel in die geschilderte Ausrichtposition seines Verbindungselements 10 an der Crimpstelle 29 gebracht wird. Dann wird das abisolierte Leitungsende 11 mit einem Bündel von bereits erwähnten Leitungsadern 13 in Richtung der aus Fig. 2 b ersichtlichen Achslinie in den Bereich des erwähnten Anschlußstücks 15 gebracht. Dann wird die Hubbewegung 23 ausgelöst, wodurch die Krampen 17 und Krallen 16 zum im Zusammenhang mit Fig. 2 c bereits beschriebenen Crimpanschluß des Verbindungselements 10 führen. Die Fig. 5 und die Fig. 8 zeigen dabei in starker Vergrößerung die Querschnittansicht durch das Anschlußstück mit den ordnungsgemäß um ein komplettes Bündel 13 von Leitungsadern 14 eingerollte Krallen 16. Dies zeichnet sich dadurch aus, daß dabei eine Crimphöhe h 5 bzw. h 8 sich jeweils ergibt.

Ausweislich der schematischen Darstellung von Fig. 3 besitzt die Vorrichtung 20 zunächst einen Kraftmesser 35, dessen Sensor 36 im vorliegenden Fall im Hubgestänge, nämlich inmitten des Stempels 27 angeordnet ist und mit seiner Meßleitung 37 zu einem Auswerter 40 der erfindungsgemäßen Vorrichtung 20 führt. In alternativer Weise wäre es aber auch möglich, einen solchen Sensor 36 im Bereich des Unterwerkzeugs 22 anzuordnen und dort insbesondere im Bereich des zum Ständer 21 hin führenden Widerlagers 38. Ein solcher Sensor 36 kann aus einem an sich bekannten Fühler, wie z.B. einem Dehnungsmeßstreifen oder einer Meßstreifen-Brückenschaltung bestehen.

Zu der erfindungsgemäßen Vorrichtung 20 gehört aber auch noch ein Längenmesser 41, dessen Meßfühler 42 in den Hubbewegungsweg 23 einer am Oberwerkzeug 24 vorgesehenen Meßkante 39 ragt, die hier als Ausleger am Stempel 27 ausgebildet ist und dabei den hier als Stift 42 gestalteten Meßfühler in das Innere einer Meßaufnahme 43 drückt. Die Meßaufnahme 43 ermittelt, ausgehend von der voll ausgefahrenen Ausgangslage des Stiftes 42 dessen Eintauchbewegung, z.B. auf kapazitivem Weg, und gibt über die Meßleitung 44 das Meßsignal ebenfalls an den Auswerter 40.

Der Auswerter 40 ist mit einem schematisch und unmaßstäblich dargestellten Steuerpult 45 versehen, das hier drei Tastaturen 46, 47, 48 aufweist, die gemäß der Steuerleitung 49 hier drei unterschiedliche, vorbestimmte Werte dem Auswerter 40 eingeben. Jede Tastatur besitzt im vorliegenden Fall jeweils drei Einstell-Tasten, die zifferstellenweise die Einer, Zehner und Hunderter eines dreistelligen Wertes durch entsprechende Druckbetätigung einzustellen gestatten. Es versteht sich, daß jeder an sich bekannte Einstellknopf dafür ebenfalls genutzt werden könnte.

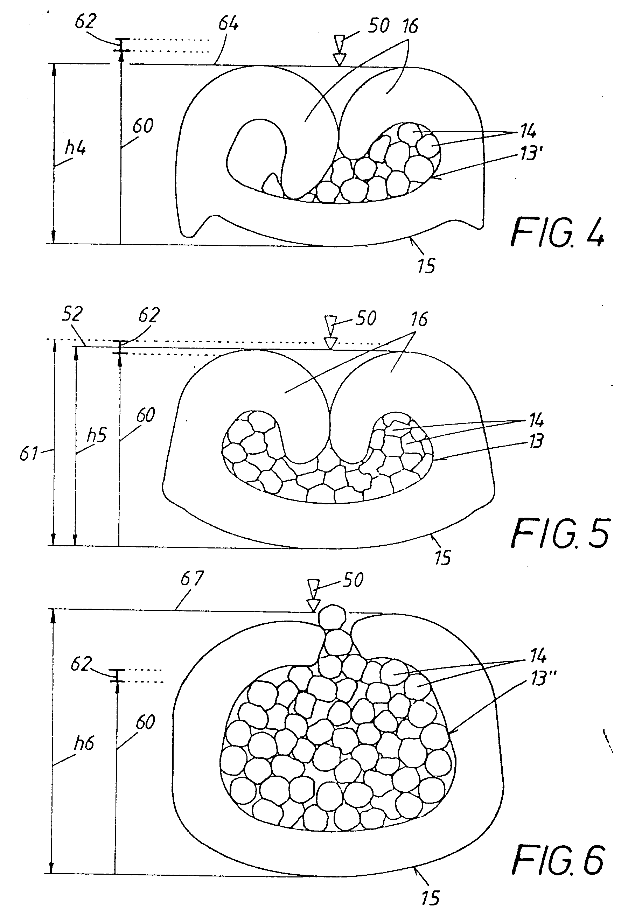

Der erste, über die Tastatur 46 einzustellende Wert ist jener erforderliche Endwert 50 der zwischen dem Oberwerkzeug 24 und Unterwerkzeug 22 aufzuwendenden Kraft gemäß der in Fig. 3, 5 bzw. 8 durch den Pfeil 50 angedeuteten Größe, der mit Sicherheit für eine bei ordnungsgemäßen Bestandteilen und Vorgängen einwandfreieCrimpung gemäß Fig. 5 und 8 ausreicht. Der eingestellte Endwert 50 wird insbesondere digital in einem Anzeigefeld 51 des Steuerpults 45 ablesbar gemacht. Dieser Endwert 50 wird vom Kraftmesser 35 überwacht. Wird er bei der Hubbewegung 23 erreicht, so beendet der Auswerter 40 über die bereits erwähnte Steuerleitung 26 den weiteren Abwärtshub des Oberwerkzeugs 24, womit im Falle der Fig. 6 an der gestrichelt angedeuteten Höhenlinie 52 der untere Umkehrpunkt der Hubbewegung in diesem ordnungsgemäßen Fall anfällt und von da ab sogleich der Rückhub der Hubbewegung 23 einsetzt. Dabei ergibt sich die bereits erwähnte Crimphöhe h 5.

Die weiteren Tastaturen 47, 48 dienen zur Einstellung sowohl eines minimalen als auch eines maximalen noch zulässigen Soll-Werts 60, 61 der tolerierbaren Crimphöhe. Dieser Toleranzbereich 62 ist in Fig. 5 durch eine Strecke 62 verdeutlicht, die, im angenommenen Idealfall, von der ordnungsgemäßen Crimphöhe h 5 nach oben und unten ragt. Diese-eingestellten Soll-Werte 60, 61 werden über entsprechende Anzeigefelder 53, 54 ablesbar gemacht und ebenfalls über die angedeutete Steuerleitung 49 dem Auswerter 40 verfügbar gemacht.

Beim Idealfall von Fig. 5 wird im Zeitpunkt des unteren Umkehrpunkts 52 der Hubbewegung die Crimphöhe h 5 vom Längenmesser 41 ermittelt und über die Steuerleitung 59 vom Auswerter 40 dem Steuerpult 45 zugeführt und dort in einem weiteren Anzeigefeld 55 als Ist-Wert 63 ablesbar gemacht. Zugleich wird über die Steuerleitung 59 zur Kontrolle auch noch der im Hubumkehrpunkt erreichte Wert 50 der Crimpkraft 50 angezeigt, wofür es das aus Fig. 3 ersichtliche Anzeigefeld 56 gibt.

Im angenommenen Idealfall von Fig. 5 liegt der ermittelte Ist-Wert h 5 der Crimphöhe innerhalb des Toleranzbereiches 62, weshalb die Vorrichtung 20 taktweise weiterläuft, um fortlaufend das nächste Verbindungselement 10 des zugeführten Elementbandes 19 zur Verarbeitungsstelle 29 zu führen. Bei der dann einsetzenden Hubbewegung 23 mag sich der aus Fig. 8 ersichtliche Fall ergeben, wo ebenfalls der bereits erwähnte eingestellte Endwert 50 der Crimpkraft dieses Mal bei der Höhenlinie 57, als untere Umkehrpunkt des Oberwerkzeugs 24, anfällt. Wie aus Fig. 8 ersichtlich, liegt zwar dieser Punkt 57 näher an der durch den eingestellten maximalen Soll-Wert 61 bestimmten maximal zulässigen Crimphöhe 58, doch liegt auch dieser Wert noch innerhalb des Toleranzbereiches 62, weshalb auch hier der Crimpanschluß als "ordnungsgemäß" vom Auswerter 40 erkannt und folglich akzeptiert wird.

Im Falle der Fig. 4 ist nun ein Fall angenommen, wo bei der Abisolation der zugehörigen elektrischen Leitung 12 einige Leitungsadern 14 versehentlich mit abgeschnitten wurden, so daß jetzt ein wesentlich schlankeres Leitungs-Bündel 13' vorliegt. Jetzt wird der Endwert 50 der voreingestellten Crimpkraft erst in einer tiefer gelegenen Höhenlinie 64 erreicht und dabei ein Ist-Wert h 4 der Crimphöhe gemessen, der unterhalb des Toleranzbereichs 62 liegt. Der Crimpanschluß nach Fig. 4 wird folglich vom Auswerter 40 als fehlerhaft erkannt und optisch in einer Alarmanzeige 65 des Steuerpults 45 kundbar gemacht. Dazu können auch akustische Signale vom Auswerter 40 abgegeben werden. Zweckmäßigerweise wird zugleich vom Auswerter 40 die Versorgungsleitung 66 für Druckluft abgeschaltet, so daß der weitere Betrieb der Vorrichtung 20 unterbrochen ist. Die mit einer fehlerhaften Anbringung des Verbindungselements 10 ausgerüstete Leitung 12 wird nun aus der Vorrichtung entfernt. Dies könnte in weiterer Automatisierung der Vorrichtung durch ein Greifwerkzeug geschehen, welche das fehlerhafte Produkt erfaßt und zum Abfall wirft. Dann könnte die Vorrichtung 20 automatisch wieder eingeschaltet werden. Dieser Fehler könnte von dem Auswerter 40 auch noch auf anderem Wege über weitere Alarmgeber kundbar gemacht werden.

Die Fig. 6 zeigt einen alternativen Fall, wo versehentlich ein querschnittsmäßig zu starkes Bündel 13˝ von Leitungsadern 14 vorliegt, bei denen dann natürlich der voreingestellte Endwert 50 der Crimpkraft 50 bereits bei einer viel höheren Position 67 der Hubbewegung erreicht wird, wobei gleichzeitig der Längenmesser 41 die zugehörige Crimphöhe h 6 ermittelt. Diese liegt deutlich oberhalb des zulässigen Toleranzbereichs 62 und wird deshalb ebenfalls als fehlerhafte Anbringung vom Auswerter 40 erkannt und in der bereits erwähnten Weise ausgewertet.

Eine entsprechende Situation ergibt sich auch in den aus Fig. 9 und 10 ersichtlichen Fällen, wo ebenfalls gegenüber dem Toleranzbereich 62 zu hoch liegende untere Umkehrpunkte 67′ bzw. 67˝ sich ergeben, weil entsprechend voreilend der Endwert 50 der Crimpkraft dabei erreicht wird. Im Falle der Fig. 9 mag dies damit zusammenhängen, daß das Material des zu crimpenden Anschlußstücks 15 zu hart oder dessen Blechwandstärke zu stark ausgefallen ist, so daß sich hier die Krallen 16 nicht ausreichend um das Leitungsbündel 13 schließen. Im Falle der Fig. 10 ist versehentlich durch Störungen in der Elementzufuhr ein doppellagiges Übereinanderliegen von zwei Anschlußstücken 15 zu verzeichnen. Auch dies wird von dem Auswerter 40 erkannt, weil hier ein zu hoher Ist-Wert h 10 der Crimphöhe anfällt.

Im Falle der Fig. 7 ist wieder ein mit Fig. 4 vergleichbarer Fall verdeutlicht, der durch eine Überpressung des Bündels 13 von Leitungsadern 14 zustande kommt. Dies mag in diesem Fall dadurch begründet sein, daß der Werkstoff für die Krallen 16 zu weich oder die Blechstärke zu dünn ausgefallen ist und daher der eingestellte Endwert 50 der Crimpkraft erst bei der eingezeichneten Höhenlinie 64′ erreicht wird.

Die dann gemessene Crimphöhe h 7 liegt dadurch deutlich unterhalb des zulässigen Toleranzbereichs 62, was von dem Auswerter 40 als Fehler erkannt und in der bereits genannten Weise ausgewertet wird.

Es versteht sich, daß der mechanische Aufbau und die Wirkungsweise der Presse 20 und ihrer Werkzeuge 24, 22 sowie deren Hubantrieb 25 in jeder beliebigen Weise gestaltet sein könnten. Anstelle des minimalen und maximalen Soll-Werts 60, 61 der Crimphöhe könnte man auch einen mittleren SollWert eingeben zuzüglich der zulässigen Toleranzabweichung nach oben und unten. Wie bereits erwähnt wurde, könnten Sensoren 36, 42 für die Kraft- und Längenmessung beliebiger Art verwendet werden. Anstelle einer Längenmessung nur in Richtung der Hubbewegung 23 der beiden Werkzeuge 22, 24 zueinander könnte man auch dazu geneigte Meßrichtungen verwenden, sofern wegen der gegebenen Form der Krallen 16 gerade dort die Empfindlichkeit für das ordnungsgemäße Einrollen der Krallen gegeben ist. Dies könnte im Extremfall auch in Querrichtung zur Hubbewegung 23 erfolgen. Der Endwert 50 der Crimpkraft wird stets so gewählt, daß es bei den beschriebenen Defekten beim Anschluß der Verbindungselemente mit Sicherheit zukeiner Beschädigung der kostspieligen Werkzeuge 24, 22 kommt.

### Bezugszeichenliste:

- 10: Verbindungselement
- 11: Leitungsende
- 12: elektrische Leitung
- 13: elektrischer Leiter, Leitungsbündel (Fig 5,7,8,9)
- 13′: Leitungsbündel (Fig. 4)
- 13˝: Leitungsbündel (Fig. 6)
- 14: Leitungsadern von 13
- 15: Anschlußstück
- 16: Krallen für 11
- 17: Krampen für 12
- 18: Steg
- 19: Element-Zuführ-Band
- 20: Vorrichtung
- 21: Ständer von 20
- 22: Unterwerkzeug von 20
- 23: Hubbewegung von 24
- 24: Oberwerkzeug von 20
- 25: Hubantrieb, Kolben-Zylinder-Anordnung
- 26: Druckluft-Leitung, Steuerleitung
- 27: Stempel
- 28: Leitfläche für 19
- 29: Crimpstelle zwischen 22, 24
- 30: Kupplungsteil von 10
- 31: Antriebsöffnung in 19
- 32: Aufnahme in 22
- 33: Schnittflächen von 24
- 34: Verformungsflächen von 24
- 35: Kraftmesser
- 36: Sensor von 35
- 37: Meßleitung von 35
- 38: Widerlager von 22
- 39: Meßkante für 41
- 40: Auswerter
- 41: Längenmesser
- 42: Meßfühler von 41, Stift
- 43: Meßaufnahme für 42
- 44: Meßleitung von 41
- 45: Steuerpult von 40
- 46: Einstellknopf, Tastatur für 50
- 47: Einstellknopf, Tastatur für 60
- 48: Einstellknopf, Tastatur für 61
- 49: Steuerleitung zwischen 45, 40
- 50: Endwert der Crimpkraft, Kraft-Pfeil
- 51: Anzeigefeld für 50
- 52: Höhenlinie, unterer Umkehrpunkt (Fig. 5)
- 53: Anzeigefeld für 60
- 54: Anzeigefeld für 61
- 55: Anzeigefeld für 63
- 56: Anzeigefeld für 50 (Ist-Wert)
- 57: Höhenlinie, Umkehrpunkt (Fig. 8)
- 58: Höhenlinie maximaler Crimphöhe (Fig. 8)
- 59: Steuerleitung zwischen 40, 45
- 60: minimaler Soll-Wert der Crimphöhe
- 61: maximaler Soll-Wert der Crimphöhe
- 62: Toleranzbereich zwischen 60, 61
- 63: Ist-Wert-Anzeige der Crimphöhe
- 64: Höhenlinie (Fig. 4)
- 64′: Höhenlinie (Fig. 7)
- 65: Alarm-Anzeige in 45
- 66: Druckluft-Versorgungsleitung
- 67: Höhenposition (Fig. 6)
- 67′: Höhenposition (Fig. 9)
- 67˝: Höhenposition (Fig. 10)

- h 4: Ist-Wert der Crimphöhe, (Fig. 4)
- h 5: Ist-Wert der Crimphöhe, Fig. 5)
- h 6: Ist-Wert der Crimphöhe, (Fig. 6)
- h 7: Ist-Wert der Crimphöhe, (Fig. 7)
- h 8: Ist-Wert der Crimphöhe, (Fig 8)
- h 9: Ist-Wert der Crimphöhe, (Fig. 9)
- h 10: ist-Wert der Crimphöhe, (Fig. 10)

- Z: Blickrichtung für Fig. 3 in Fig. 1

## Patentansprüche

1. Vorrichtung zum Crimpanschluß einer fortlaufenden Schar von elektrischen Verbindungselementen (10) mit crimpfähigen Krallen (16) an zugeordneten elektrischen Leitungen (12),
mit einem Unterwerkzeug (22) zur einzelweisen Aufnahme eines Verbindungselements (10) sowie zur lagegerechten Positionierung seiner Krallen (16) gegenüber einem dazu hubbeweglichen Oberwerkzeug (24),
das die Krallen (16) bei der Hubbewegung (23) um die eingeführte Leitung (12) crimpt,
mit einem Kraftmesser (35) für die bei der Hubbewegung (23) zwischen dem Ober- und Unterwerkzeug (22,24) übertragene, zum Crimpen der Krallen (16) genutzte Kraft (Crimpkraft)
und mit einem elektronischen Auswerter für den Meßwert,
wobei der Kraftmesser (35) einen zwar einstellbaren aber für die Verarbeitung der ganzen Schar der Verbindungselemente (10) feststehenden Endwert (50) der Crimpkraft überwacht
und der Auswerter (40) bei Erreichen des Endwerts (50) sogleich den weiteren Abwärtshub des Oberwerkzeugs (24) stoppt sowie seinen Rückhub startet und somit den unteren Umkehrpunkt (52;64;67) der Hubbewegung (23) für jedes Verbindungselement (10) individuell bestimmt,
dadurch gekennzeichnet, daß ein vorzugsweise in Richtung der Hubbewegung (23) meßwirksamer Längenmesser (41) mit dem Auswerter (40) verbunden ist und die im unteren Umkehrpunkt (52;64;67) des Oberwerkzeugs jeweils individuell anfallende Crimphöhe (h4;h5;h6) der Krallen (16) der einzelnen Verbindungselemente (10) bestimmt
und der auf einen vorgegebenen Soll-Wert (53,54) der Crimphöhe einstellbare Auswerter (40) dann einen fehlerhaften Crimpanschluß (15) feststellt,
wenn die Differenz zwischen dem ermittelten Ist-Wert (h4;h5;h6) und dem eingestellten Soll-Wert (53,54) eine bestimmte Toleranz (62) übersteigt.

2. Vorrichtung nach Anspruch 1, dadurch gekennzeichnet, daß der Auswerter (40) im Falle eines festgestellten fehlerhaften Crimpanschlusses (15) den weiteren Betrieb der Vorrichtung (20) abschaltet.

3. Vorrichtung nach Anspruch 1 oder 2, dadurch gekennzeichnet, daß ein Greifwerkzeug an den Auswerter (40) angeschlossen ist, welches im Falle eines festgestellten fehlerhaften Crimpanschlusses (15) das betreffende Verbindungselement (10) als Abfall aussortiert.

4. Vorrichtung nach einem oder mehreren der Ansprüche 1 bis 3, dadurch gekennzeichnet, daß der Auswerter (40) mit einem optischen und/oder akustischen Alarmgeber (65) versehen ist, den er im Falle eines festgestellten fehlerhaften Crimpanschlusses (15) wirksam setzt.

5. Vorrichtung nach einem oder mehreren der Ansprüche 1 bis 4, dadurch gekennzeichnet, daß der Meßfühler (42) des Längenmessers (41) in den Hubweg des Oberwerkzeugs (24) hineinragt und den Weg zwischen einer festen Ausgangshöhe des Oberwerkzeugs (24), wie dessen oberem Umkehrpunkt, und seinem unteren Umkehrpunkt (h4;h5;h6) mißt.

6. Vorrichtung nach Anspruch 5, dadurch gekennzeichnet, daß der Meßfühler (42) einen vom Oberwerkzeug (24) nachgiebig unter eine Ausgangshöhen-Marke drückbaren (39) Stift (42) ausweist, der insbesondere in eine Meßaufnahme (43) axial eintaucht.

7. Vorrichtung nach einem oder mehreren der Ansprüche 1 bis 6, dadurch gekennzeichnet, daß der Sensor (36) des Kraftmessers (35) im Hubgestänge (27) des Oberwerkzeugs (24) angeordnet ist.

8. Vorrichtung nach einem oder mehreren der Ansprüche 1 bis 6, dadurch gekennzeichnet, daß der Sensor (36) des Kraftmessers (35) im Bereich des Unterwerkzeugs (22) angeordnet ist, insbesondere in dessen Widerlager (38).

9. Vorrichtung nach einem oder mehreren der Ansprüche 1 bis 8, dadurch gekennzeichnet, daß der Auswerter (40) eine Eingabeeinrichtung (46,47,48) aufweist zum Einstellen des Endwerts (50) der Crimpkraft und des Soll-Werts (60, 61) sowie ggf. des Toleranzbereiches (62) der Crimphöhe (h 5).

10. Vorrichtung nach Anspruch 9, dadurch gekennzeichnet, daß zum Einstellen des Soll-Werts und des Toleranzbereiches (62) der Crimphöhe (h 5) der noch tolerierbare Maximalwert (61) und der Minimalwert (60) der gewünschten Crimphöhe eingebbar sind.

11. Vorrichtung nach einem oder mehreren der Ansprüche 1 bis 10, dadurch gekennzeichnet, daß der Auswerter (40) Anzeigefelder (51;53;54;55) für den eingegebenen SollWert (50) und/oder die anfallenden Ist-Werte der Crimpkraft und der Crimphöhe (55) aufweist.

12. Vorrichtung nach einem oder mehreren der Ansprüche 1 bis 11, dadurch gekennzeichnet, daß der Auswerter (40) eine Tastatur (46,47,48) zur ziffernstellen-weisen Eingabe der Soll-Werte (50;60,61) bzw. des Toleranzbereiches der Crimpkraft bzw. der Crimphöhe aufweist.

## Claims

1. Device for crimp connection of a continuous batch of electrical connecting elements (10) with crimpable claws (16) on associated electrical cables (12),
with a lower tool (22) for individual reception of a connecting element (10) and for correct positioning of the claws (16) thereof relative to an upper tool (24) which is vertically movable with respect thereto,
this lower tool crimping the claws (16) around the introduced cable (12) during the stroke movement (23),
with a dynamometer (35) for the force (crimping force) transferred between the upper and lower tools (22, 24) during the stroke movement (23) and used for crimping the claws (16),
and with an electronic evaluating device for the measured value,
wherein the dynamometer (35) monitors a final value (50) of the crimping force which value is in fact adjustable but is fixed for processing the entire batch of connecting elements (10)
and when the final value (50) is reached the evaluating device (40) immediately stops the further downward stroke of the upper tool (24) and starts the return stroke thereof and thus determines the lower reversal point (52; 64; 67) of the stroke movement (23) individually for each connecting element (10),
characterised in that a length measuring device (41) which is preferably active for measurement in the direction of the stroke movement (23) is connected to the evaluating device (40) and determines the crimp height (h 4; h 5; h 6) of the individual connecting elements (10) occurring individually in each case in the lower reversal point (52; 64; 67) of the upper tool
and the evaluating device (40) which can be set to a predetermined theoretical value (53, 54) of the crimp height then determines a defective crimp connection (15),
when the difference between the determined actual value (h 4; h 5; h 6) and the set theoretical value (53, 54) exceeds a specific tolerance (62).

2. Device according to Claim 1, characterised in that if a defective crimp connection (15) is determined the evaluating device (40)switches off the further operation of the device (20).

3. Device according to Claim 1 or 2, characterised in that a gripping tool is connected to the evaluating device (40), and if a defective crimp connection (15, is determined this gripping tool picks out the relevant connecting element (10) as scrap.

4. Device according to one or more of Claims 1 to 3, characterised in that the evaluating device (40) is provided with an optical and/or acoustic alarm (65) which it puts into effect if a defective crimp connection (15) is determined.

5. Device according to one or more of Claims 1 to 4, characterised in that the measurement sensor (42) of the length measuring device (41) projects into the stroke path of the upper tool (24) and measures the distance between a fixed starting height of the upper tool (24) such as its upper reversal point, and its lower reversal point (h 4; h 5; h 6).

6. Device according to Claim 5, characterised in that the measurement sensor (42) has a pin (42) which can be pressed (39) flexibly below a starting height mark by the upper tool (24) and which in particular dips axially into a measuring receptacle (43).

7. Device according to one or more of Claims 1 to 6, characterised in that the sensor (36) of the dynamometer (35) is disposed in the stroke linkage (27) of the upper tool (24).

8. Device according to one or more of Claims 1 to 6, characterised in that the sensor (36) of the dynamometer (35) is disposed in the region of the lower tool (22), particularly in the abutment (38) thereof.

9. Device according to one or more of Claims 1 to 8, characterised in that the evaluating device (40) has an input arrangement (46, 47, 48) for setting the final value (50) of the crimping force and the theoretical value (60, 61) as well as optionally the tolerance range (62) of the crimp height (h 5).

10. Device according to Claim 9, characterised in that for setting the theoretical value and tolerance range (62) of the crimp height (h 5) the maximum value (61) which can still be tolerated and the minimum value (60) of the desired crimp height can be input.

11. Device according to one or more of Claims 1 to 10, characterised in that the evaluating device (40) has display fields (51; 53; 54; 55) for the input theoretical value (50) and/or the actual values occurring of the crimping force and crimp height (55).

12. Device according to one or more of Claims 1 to 11, characterised in that the evaluating device (40) has keyboards (46, 47, 48) for digit by digit input of the theoretical values (50; 60; 61), the tolerance range of the crimping force and the crimp height respectively.

## Revendications

1. Dispositif de raccordement par sertissage, à des conducteurs électriques (12) associés, d'un groupe ininterrompu d'éléments de connexion électrique (10) munis de griffes (16) aptes au sertissage,
comprenant un outil inférieur (22) destiné à la réception individuelle d'un élément de connexion (10), ainsi qu'au positionnement correct de ses griffes (16) par rapport à un outil supérieur (24) qui peut effectuer une course par rapport à l'outil précité
et qui, lors de la course (23), sertit les griffes (16) autour du conducteur engagé (12) ;
un dynamomètre (35) pour la force (force de sertissage) utilisée pour le sertissage des griffes (16) et transmise, lors de la course (23), entre les outils supérieur et inférieur (22, 24) ;
et un interprétateur électronique de la valeur mesurée, dispositif dans lequel le dynamomètre (35) surveille une valeur finale (50) de la force de sertissage qui est, certes, réglable, mais est cependant fixe pour le traitement de l'intégralité du groupe des éléments de connexion (10)
et, lorsque la valeur finale (50) est atteinte, l'interprétateur (40) stoppe immédiatement la poursuite de la course descendante de l'outil supérieur (24), déclenche sa course de retour et détermine ainsi, individuellement, le point inférieur (52 ; 64 ; 67) d'inversion de la course (23) pour chaque élément de connexion (10),
caractérisé par le fait qu'un mesureur de longueurs (41), effectuant de préférence un mesurage dans la direction de la course (23), est raccordé à l'interprétateur (40) et détermine la hauteur considérée de sertissage (h4 ; h5 ; h6) des griffes (16) des éléments individuels de connexion (10) se présentant, individuellement, au point inférieur d'inversion (52 ; 64 ; 67) de l'outil supérieur,
et l'interprétateur (40), pouvant être réglé sur une valeur de consigne préétablie (53, 54) de la hauteur de sertissage, constate un raccordement serti défectueux (15)
lorsque la différence, entre la valeur réelle établie (h4 ; h5 ; h6) et la valeur de consigne réglée (53, 54), excède une tolérance déterminée (62).

2. Dispositif selon la revendication 1, caractérisé par le fait que, dans le cas d'un raccordement serti défectueux (15) constaté, l'interprétateur (40) interrompt la poursuite du fonctionnement du dispositif (20).

3. Dispositif selon la revendication 1 ou 2, caractérisé par le fait qu'un outil de préhension, raccordé à l'interprétateur (40), met au rebut l'élément de connexion considéré (10) dans le cas d'un raccordement serti défectueux (15) constaté.

4. Dispositif selon l'une ou plusieurs des revendications 1 à 3, caractérisé par le fait que l'interprétateur (40) est doté d'une alarme (65) optique et/ou acoustique, dont il déclenche le fonctionnement dans le cas d'un raccordement serti défectueux (15) constaté.

5. Dispositif selon l'une ou plusieurs des revendications 1 à 4, caractérisé par le fait que la sonde de mesure (42) du mesureur de longueurs (41) s'engage dans la course de l'outil supérieur (24) et mesure la distance comprise entre une hauteur initiale fixe de l'outil supérieur (24), telle que le point supérieur d'inversion de ce dernier, et son point inférieur d'inversion (h4 ; h5 ; h6).

6. Dispositif selon la revendication 5, caractérisé par le fait que la sonde de mesure (42) présente un pointeau (42) qui peut être pressé (39) en souplesse, par l'outil supérieur (24), au-dessous d'un repère de hauteur initiale, et qui s'enfonce en particulier axialement dans un logement de mesure (43).

7. Dispositif selon l'une ou plusieurs des revendications 1 à 6, caractérisé par le fait que le capteur (36) du dynamomètre (35) est logé dans la tringlerie motrice (27) de l'outil supérieur (24).

8. Dispositif selon l'une ou plusieurs des revendications 1 à 6, caractérisé par le fait que le capteur (36) du dynamomètre (35) se trouve dans la région de l'outil inférieur (22), notamment dans la contre-butée (38) de ce dernier.

9. Dispositif selon l'une ou plusieurs des revendications 1 à 8, caractérisé par le fait que l'interprétateur (40) présente un dispositif de saisie (46, 47, 48) en vue de régler la valeur finale (50) de la force de sertissage et la valeur de consigne (60, 61), ainsi qu'éventuellement la plage de tolérance (62) de la hauteur de sertissage (h5).

10. Dispositif selon la revendication 9, caractérisé par le fait que la valeur maximale (61) encore tolérable et la valeur minimale (60) de la hauteur de sertissage souhaitée peuvent être saisies, en vue du réglage de la valeur de consigne et de la plage de tolérance (62) de la hauteur de sertissage (h5).

11. Dispositif selon l'une ou plusieurs des revendications 1 à 10, caractérisé par le fait que l'interprétateur (40) présente des zones (51 ; 53 ; 54 ; 55) d'affichage de la valeur de consigne (50) saisie et/ou des valeurs réelles considérées de la force de sertissage et de la hauteur de sertissage (55).

12. Dispositif selon l'une ou plusieurs des revendications 1 à 11, caractérisé par le fait que l'interprétateur (40) comporte un clavier (46, 47, 48) en vue de saisir respectivement, en mode numérique, les valeurs de consigne (50 ; 60, 61) ou la plage de tolérance de la force de sertissage ou de la hauteur de sertissage.
